# EUROPEAN PATENT SPECIFICATION

(11) **EP 0 404 222 B1**
(45) Date of publication and mention of the grant of the patent: **13.10.1993**
(21) Application number: 90201503.1
(22) Date of filing: 11.06.1990
(51) Int. Cl.: B29C 45/17, B65D 25/30

(54) **Process for manufacturing a plastic crate by injection moulding, and plastic crate manufactured by said process**
Verfahren zum Herstellen eines Kunststoffkastens durch Spritzgiessen und durch dieses Verfahren hergestellter Kunststoffkasten
Procédé pour fabriquer un casier en matière plastique par moulage par injection, et casier en matière plastique fabriqué par ce procédé

(30) Priority: 20.06.1989 NL 8901550
(43) Date of publication of application: 27.12.1990
(73) Proprietor: WAVIN B.V., NL-8011 CW Zwolle (NL)
(72) Inventor: Roskam, Klaas, NL-7771 WH Hardenberg (NL)
(74) Representative: Iemenschot, Johannes Andreas, Ir.

(56) References cited:
- EP-A- 0 289 230
- GB-A- 1 371 240
- NL-A- 7 906 528
- US-A- 3 334 767
- US-A- 3 506 154

## Description

The present invention relates to a process for manu- facturing a plastic crate by injection mouding, said crate having a bottom and upright side walls, at least one of the side walls being provided near the top side with a handle bounded at the bottom side by a handle opening, the handle having a substantially closed outer wall which is integral with the remainder of the crate, the process comprising the steps of injecting a liquid plastic material into a mould cavity corresponding to the shape of the crate to be manufactured, until the mould cavity is substantially filled, cooling the injected plastic material, and opening the mould.

Such a process is disclosed in US-A-3,506,154. In this known process an expanded or foamed resin is injected directly into a mould cavity. That part of the cellular material directly touching the mould cavity walls will be immediately chilled and form a high density non-porous skin, whereas the expanded material in the region between the mould cavity walls will remain a low density material. In this manner the hollow space between the outer and inner walls forming the bottom and the side walls will automati- cally include a cellular material.

The known process has the disadvantage that the crate can only be manufactured from an expanded or foamed resin and that for manufacturing a double-walled crate a relati- vely large amount of material is needed. Moreover, with the known process the possible shapes of a crate are limited.

The object of the invention is to provide a process which does not have these disadvantages.

This object is achieved by a process of the abovemen- tioned type which is characterized in that a gas under pressure is injected into the stream of liquid plastic material for the formation of the handle, in such a way that at least one cavity is formed in said liquid material and that said material is blown against the wall of the mould cavity part for the handle, the gas pressure is maintained during the cooling of said material, and the gas pressure is released just before opening of the mould.

By means of the process according to the invention many types of crates can be manufactured having relatively thin walls and having one or more handles which are sufficiently strong to carry the weight of the full crate and which lie comfortably in the hand.

Through the process according to the invention the quantity of material required for the handle can remain limited. The mould used in the process can be relatively simple. This permits optimum fitting of cooling channels in the mould, so that the cycle time can be relatively short. The gas holds the walls of the handle pressed against the inside wall of the mould part concerned, which optimizes the cooling process.

Preferred embodiments according to the process according to the invention are described in the process subclaims.

The invention also relates to a plastic crate manufactured by injection moulding having a bottom and upright side walls, at least one of the side walls being provided near the top side with a handle bounded at the bottom side by a handle opening, the handle having a substantially closed outer wall which is integral with the remainder of the crate, characterized in that the handle is hollow, the wall of the handle enclosing at least one cavity which is connected to the environment by a bore of relatively small size in the wall of the handle.

US-A-3,506,154 discloses a plastic crate having handles which are hollow. However, this crate is manufactured by a rotational moulding process and the wall of each handle does not enclose a cavity which is connected to the environment by a bore of relatively small size in the wall of the handle.

The invention will now be explained in greater detail with reference to the following example of an embodiment shown in the drawings, in which:
Figure 1 is a view in perspective of a possible embodiment of a crate according to the invention;
Figure 2 is a side view on an enlarged scale of the crate of Figure 1 in the direction of the arrow II;
Figure 3 is a view of a side wall of the crate of Figure 1, provided with a handle, in a section along the line III-III in Figure 2;
Figure 4 is a top view of a side wall of the crate of Figure 1, provided with a handle, partially in a section along the line IV-IV in Figure 2; and
Figure 5 shows a detail V of Figure 4 on an enlarged scale.

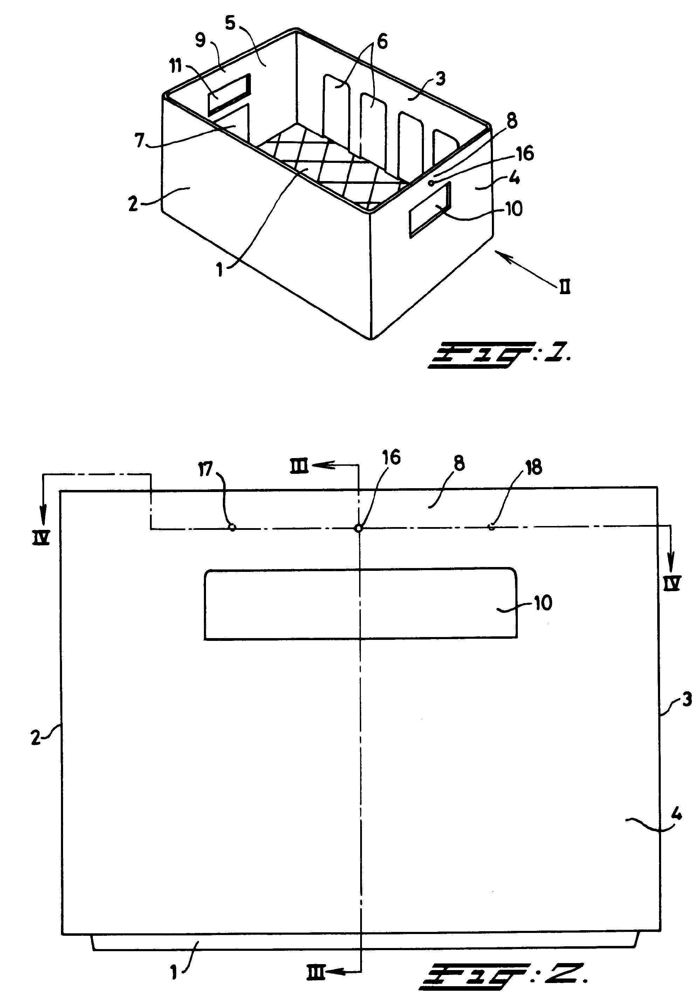

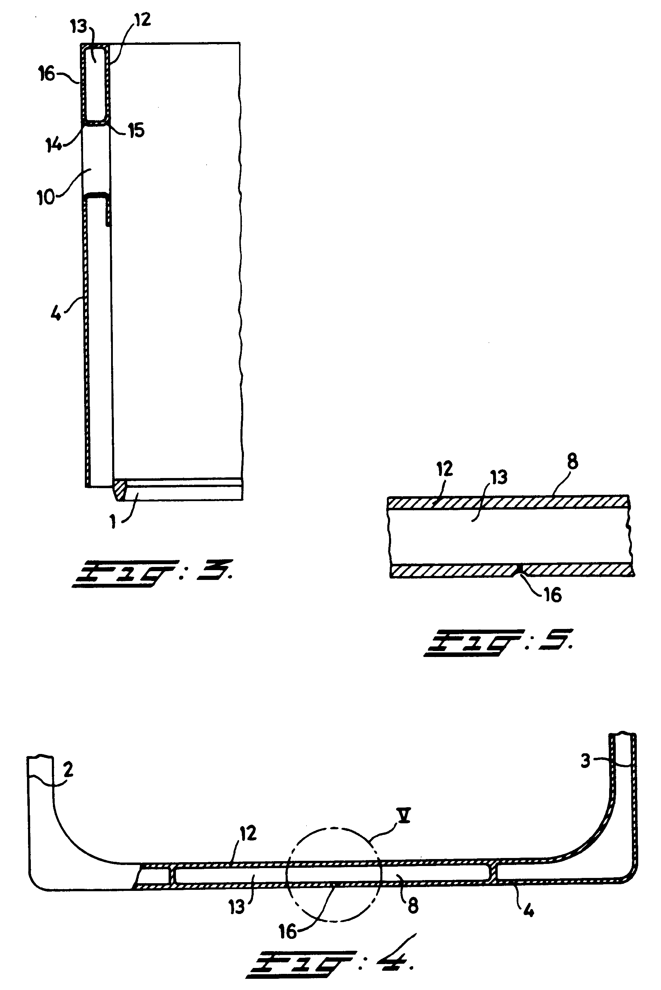

The crate shown in Figure 1 comprises a bottom 1, two long upright side walls 2 and 3, and two short upright walls 4 and 5. The side walls of the crate are made double-walled, the inner wall of the double wall being removed locally, so that openings 6, 7 are produced in the side walls 2, 3 and 4, 5. The two opposite short side walls 4, 5 are each provided at the top side with a handle 8, 9, which at the bottom side is bounded by handle opening 10, 11. In the crate according to the invention the handles 8 and 9 are made hollow with a substantially closed wall 12 (see Figs. 3 and 4).

The crate described above, with the exception of the handles, is moulded in a conventional manner by liquid plastic material being injected into a mould cavity in a mould corresponding to the shape of the crate, until the mould cavity is substantially filled, the injected plastic material is cooled, and the mould is then opened. According to the invention, each of the handles 8, 9 is formed by injecting gas under pressure into the stream of liquid plastic material for the formation of a handle 8, 9, in such a way that at least one cavity 13 is produced in said liquid material, and said material is blown against the wall of the mould cavity part for the handle. During the cooling of this material the gas pressure is maintained, and the gas pressure is released just before the mould is opened. The handles 8, 9 thus formed are subsequently integral with the remainder of the crate and can be designed with rounded edges 14, 15.

The injection of gas under pressure into the stream of liquid plastic material for forming a handle 8, 9 can take place through a gas injection aperture which is provided in such a way in the mould cavity part for the handle in question that at the moment that the mould cavity part for the handle is not yet entirely filled with material this aperture is situated in the core of the material which has flowed in at the time. At that moment gas under pressure is injected through the gas injection aperture into the liquid plastic material.

The formation of a cavity in a product made of plastic material by the injection of gas under pressure into the material is known per se, but not for the formation of a hollow handle on a crate. It is certainly not known to use this technique for the formation of a hollow part in a product made of plastic material at or in the vicinity of a flow seam, as is the case with the present invention.

According to a particular embodiment of the process according to the invention, the material for each of the handles 8, 9 is introduced from the two sides into the mould cavity part for the handle 8, 9 in question, and the injection of gas under pressure takes place at the point where the material flows merge in the mould cavity part in question, at the moment that these material flows merge, and before the mould cavity part is completely filled. The gas injection aperture in this case lies approximately at the centre of the outside wall of the handle 8, 9.

With this embodiment of the process according to the invention a crate of the type shown in the figures is obtained, the hollow handles 8, 9 each being provided with at least one bore 16 by means of which the cavity 13 in the handle 8, 9 is connected to the environment.

According to another embodiment of the process according to the invention, the material for each of the handles 8, 9 is introduced from one of the two sides into the mould cavity part for the handle 8, 9 in question, and the injection of the gas under pressure takes place near the side of the particular mould cavity part where the material is being introduced, at the moment that the front of the material flow has just passed the gas injection point. The material for forming the handles 8, 9 then merges near the handles with the material of the remainder of the crate. The bore in each handle 8, 9 is then situated near one of the sides of the handle, for example at a point which is indicated by reference number 17 in Figure 2.

According to yet another embodiment of the process according to the invention, the material for each of the handles 8, 9 is introduced from the two sides into the mould cavity part for the handle 8, 9 in question, and the injection of gas under pressure takes place near the sides of the particular mould cavity part where the material is introduced, at the moment that the fronts of the two material flows have just passed the gas injection points. The fronts of the two material flows meeting each other approximately at the centre of the handle are now pressed with great force against each other, thus causing a very intense fusion. With this embodiment of the process according to the invention, a crate is formed in which the two handles 8, 9 each contain two cavities which are separated from each other by means of a partition situated approximately in the centre of the handle, and in which each cavity is connected to the environment by means of its own bore. In Figure 2 the two bores near the ends of the handle 8, 9 are indicated by the reference numbers 17 and 18.

In the example of an embodiment the invention is described for a crate of a specific shape. The invention is not, however, limited to such a crate and can be used just as well for crates or trays of a different shape and of different dimensions, with or without a lattice.

## Claims

1. Process for manufacturing a plastic crate by injection moulding, said crate having a bottom (1) and upright side walls (2 to 5), at least one of the side walls (4, 5) being provided near the top side with a handle (8, 9) bounded at the bottom side by a handle opening (10, 11), the handle (8, 9) having a substantially closed outer wall (12) which is integral with the remainder of the crate, the process comprising the steps of injecting a liquid plastic material into a mould cavity corresponding to the shape of the crate to be manufactured, until the mould cavity is substantially filled, cooling the injected plastic material, and opening the mould, **characterizing in that** a gas under pressure is injected into the stream of liquid plastic material for the formation of the handle (8, 9), in such a way that at least one cavity (13) is formed in said liquid material and that said material is blown against the wall of the mould cavity part for the handle, the gas pressure is maintained during the cooling of said material, and the gas pressure is released just before opening of the mould.

2. Process according to claim 1, **characterized in** **that** the material of the handle (8, 9) is introduced from the two sides into the mould cavity part for the handle, and the injection of the gas under pressure takes place at the point where the material flows merge in the mould cavity part in question, at the moment that these material flows merge, and before the mould cavity part is completely filled.

3. Process according to claim 1, **characterized in** **that** the material for the handle (8, 9) is introduced from one of the two sides into the mould cavity part for the handle, and the injection of the gas under pressure takes place near the side of the particular mould cavity part where the material is being introduced, at the moment that the front of the material flow has just passed the gas injection point.

4. Process according to claim 1, **characterized in** that the material for the handle (8, 9) is introduced from the two sides into the mould cavity part for the handle, and the injection of the gas under pressure takes place near the sides of the particular mould cavity part where the material is being introduced, at the moment that the fronts of the material flows have just passed the gas injection point.

5. Plastic crate manufactured by injection moulding having a bottom (1) and upright side walls (2 to 5), at least one of the side walls (4, 5) being provided near the top side with a handle (8, 9) bounded at the bottom side by a handle opening (10, 11), the handle (8, 9) having a substantially closed outer wall (12) which is integral with the remainder of the crate, **characterized in that** the handle (8, 9) is hollow, the wall (12) of the handle enclosing at least one cavity (13) which is connected to the environment by a bore (16; 17, 18) of relatively small size in the wall of the handle.

6. Crate according to claim 5, **characterized in that** the handle contains only one cavity (13), and the bore (16) is situated approximately in the centre or near one of the sides of the handle (8, 9).

7. Crate according to claim 5, **characterized in that** the handle contains two cavities which are separated from each other by means of a partition lying approximately in the centre of the handle, and each cavity is connected to the environment by means of its own bore (17, 18).

8. Crate according to claim 7, **characterized in that** the bores (17, 18) are situated near the sides of the handle (8, 9).

## Patentansprüche

1. Verfahren zum Herstellen eines Kunststoffkastens durch Spritzgießen, wobei der Kasten einen Boden (1) und aufrechte Seitenwände (2 bis 5) aufweist, zumindest eine der Seitenwände (4,5) nahe der Oberseite mit einem Handgriff (8,9) versehen ist, der an der Unterseite von einer Handgrifföffnung (10,11) begrenzt ist, und der Handgriff (8,9) eine im wesentlichen geschlossene Außenwand (12) besitzt, die mit dem übrigen Teil des Kastens einstückig ist, wobei das Verfahren die Schritte des Einspritzens von flüssigem Kunststoffmaterial in einen Formhohlraum entsprechend der Form des herzustellenden Kastens, bis der Formhohlraum im wesentlichen gefüllt ist, das Kühlen des eingespritzten Kunststoffmaterials und das Öffnen der Form umfaßt, dadurch gekennzeichnet, daß ein Gas unter Druck in den Strom des flüssigen Kunststoffmaterials zur Bildung des Handgriffs (8,9) eingeblasen wird, derart, daß zumindest ein Hohlraum (13) im Flüssigmaterial gebildet und das Material gegen die Wand des Formhohlraumteils für den Handgriff geblasen wird, der Gasdruck während des Kühlens des Materials aufrechterhalten wird und der Gasdruck kurz vor dem Öffnen der Form abgelassen wird.

2. Verfahren nach Anspruch 1, dadurch gekennzeichnet, daß das Material für den Handgriff (8,9) von den beiden Seiten in den Formhohlraumteil für den Handgriff eingeführt wird und das Einblasen des Gases unter Druck an der Stelle, wo die Materialströme in dem in Rede stehenden Formhohlraumteil verschmelzen, in dem Augenblick stattfindet, in dem diese Materialströme verschmelzen, und bevor der Formhohlraumteil vollständig gefüllt ist.

3. Verfahren nach Anspruch 1, dadurch gekennzeichnet, daß das Material für den Handgriff (8,9) von einer der beiden Seiten in den Formhohlraumteil für den Handgriff eingeführt wird und das Einblasen von Gas unter Druck nahe der Seite des jeweiligen Formhohlraumteils, wo das Material eingeführt wird, in dem Augenblick stattfindet, in dem die Front des Materialstroms die Gaseinblasstelle gerade passiert hat.

4. Verfahren nach Anspruch 1, dadurch gekennzeichnet, daß das Material für den Handgriff (8,9) von den beiden Seiten in den Formhohlraumteil für den Handgriff eingeführt wird und das Einblasen des Gases unter Druck nahe den Seiten des jeweiligen Formhohlraumteils, wo das Material eingeführt wird, in dem Augenblick stattfindet, in dem die Fronten der Materialströme die Gaseinblasstelle gerade passiert haben.

5. Kunststoffkasten, hergestellt durch Spritzgießen, mit einem Boden (1) und aufrechten Seitenwänden (2 bis 5), wobei zumindest eine der Seitenwände (4,5) nahe der Oberseite mit einem Handgriff (8,9) versehen ist, der an der Unterseite von einer Handgrifföffnung (10,11) begrenzt ist, und der Handgriff (8,9) eine im wesentlichen geschlossene Außenwand (12) besitzt, die mit dem übrigen Teil des Kastens einstückig ist, dadurch gekennzeichnet, daß der Handgriff (8,9) hohl ist und die Wand (12) des Handgriffs zumindest einen Hohlraum (13) umschließt, der mit der Umgebung durch eine Bohrung (16;17,18) von verhältnismäßig geringer Größe in der Wand des Handgriffs verbunden ist.

6. Kasten nach Anspruch 5, dadurch gekennzeichnet, daß der Handgriff nur einen Hohlraum (13) enthält und die Bohrung (16) etwa in der Mitte oder nahe einer der Seiten des Handgriffs (8,9) gelegen ist.

7. Kasten nach Anspruch 5, dadurch gekennzeichnet, daß der Handgriff zwei Hohlräume enthält, die durch eine etwa in der Mitte des Handgriffs liegende Unterteilung voneinander getrennt sind und jeder Hohlraum mit der Umgebung durch seine eigene Bohrung (17,18) verbunden ist.

8. Kasten nach Anspruch 7, dadurch gekennzeichnet, daß die Bohrungen (17,18) nahe den Seiten des Handgriffs (8,9) gelegen sind.

## Revendications

1. Procédé pour fabriquer une caisse à claire-voie en matière plastique par moulage par injection, la dite caisse à claire-voie ayant un fond (1) et des parois latérales droites (2 à 5), au moins une des parois latérales (4, 5) étant pourvue près du côté du dessus d'une poignée (8, 9), limitée au côté du dessous par une ouverture de poignée (10, 11), la poignée (8, 9) ayant une paroi extérieure (12) sensiblement fermée qui est d'une pièce avec le reste de la caisse à claire-voie, le procédé comprenant les étapes d'injection d'une matière plastique liquide dans une cavité de moule correspondant à la forme de la caisse à claire-voie à fabriquer, jusqu'à ce que la cavité de moule soit sensiblement remplie, de refroidissement de la matière plastique injectée, et d'ouverture du moule, caractérisé en ce qu'un gaz sous pression est injecté dans le courant de matière plastique liquide pour la formation de la poignée (8, 9), de telle façon qu'au moins une cavité (13) est formée dans la dite matière liquide et que la dite matière est soufflée contre la paroi de la partie de cavité de moule pour la poignée, la pression de gaz est maintenue durant le refroidissement de la dite matière, et la pression de gaz est supprimée juste avant l'ouverture du moule.

2. Procédé selon la revendication 1, caractérisé en ce que la matière de la poignée (8, 9) est introduite à partir des deux côtés dans la partie de cavité de moule pour la poignée, et que l'injection du gaz sous pression prend place au point où les flux de matière fusionnent dans la partie de cavité de moule en question, au moment où ces flux de matière fusionnent, et avant que la partie de cavité de moule soit complètement remplie.

3. Procédé selon la revendication 1, caracterise en ce que la matière pour la poignée (8, 9) est introduite à partir d'un des deux côtés dans la partie de cavité de moule pour la poignée, et que l'injection du gaz sous pression prend place près du côté de la partie de cavité de moule particulière où la matière est en cours d'introduction, au moment où le front du flux de matière vient juste de passer le point d'injection de gaz.

4. Procédé selon la revendication 1, caractérisé en ce que la matière pour la poignée (8, 9) est introduite à partir des deux côtés dans la partie de cavité de moule pour la poignée, et que l'injection du gaz sous pression prend place près des côtés de la partie de cavité de moule particulière où la matière est en cours d'introduction, au moment où les fronts des flux de matière viennent juste de passer le point d'injection de gaz.

5. Caisse à claire-voie en matière plastique fabriquée par moulage par injection ayant un fond (1) et des parois latérales (2 à 5) droites, au moins une des parois latérales (4, 5) étant pourvue près du côté du dessus d'une poignée (8, 9) limitée au côté du dessous par une ouverture de poignée (10, 11), la poignée (8, 9) ayant une paroi extérieure (12) sensiblement fermée qui est d'une seule pièce avec le reste de la caisse à claire-voie, caractérisée en ce que la poignée (8, 9) est creuse, la paroi (12) de la poignée renfermant au moins une cavité (13) qui est reliée à l'environnement par un perçage (16; 17, 18) de taille relativement petite dans la paroi de la poignée.

6. Caisse à claire-voie selon la revendication 5, caractérisée en ce que la poignée contient seulement une cavité (13), et que le perçage (16) est situé approximativement au centre ou près d'un des côtés de la poignée (8, 9).

7. Caisse à claire-voie selon la revendication 5, caractérisée en ce que la poignée contient deux cavités qui sont séparées l'une de l'autre au moyen d'une cloison se trouvant approximativement au centre de la poignée, et que chaque cavité est reliée à l'environnement au moyen de son propre perçage (17, 18).

8. Caisse à claire-voie selon la revendication 7, caractérisée en ce que les perçages (17, 18) sont situés près des côtés de la poignée (8, 9).
